# EUROPÄISCHE PATENTANMELDUNG

(11) **EP 1 298 421 A1**
(43) Veröffentlichungstag der Anmeldung: **02.04.2003**
(21) Anmeldenummer: 01123127.1
(22) Anmeldetag: 27.09.2001
(51) Int. Cl.: G01F 1/84, G01F 25/00

(54) **Verfahren zur Überwachung eines Coriolis-Massedurchflussmesser**

(71) Anmelder: Endress + Hauser Flowtec AG, CH-4153 Reinach BL (CH)
(72) Erfinder: Matt, Christian, 4147 Aesch, BL (CH)
(74) Vertreter: Andres, Angelika

(57) **Zusammenfassung**

Bei einem Verfahren zur Überwachung eines Coriolismassedurchflussmessers werden die Eingangs- bzw. die Ausgangssignale des Signalprozessors DSP überwacht und im Fehlerfall eine entsprechende Fehlermeldung abgespeichert. Da der Fehlerfall einerseits durch Gerätefehler und andererseits durch schlechte Betriebsbedingungen verursacht sein kann, werden die Fehlermeldungen in zwei Klassen klassifiziert, gerätebedingt und betriebsbedingt.

Bei einem gerätebedingten Fehlerfall ist es für den Anwender von großer Wichtigkeit, die Fehlerursache näher zu lokalisieren. Deshalb werden die einzelnen Komponenten des Massedurchflussmessers einem Funktionstest unterzogen und/oder die momentanen Messgrößen mit zu einem früheren Zeitpunkt gewonnenen Referenzmessgrößen, verglichen.

## Beschreibung

Die Erfindung bezieht sich auf ein Verfahren zur Überwachung eines Coriolis-Massedurchflussmesser.

Coriolis-Massedurchflussmesser werden vielfach in der Prozessautomatisierungstechnik zur Bestimmung des Massedurchflusses eines Fluids in einem Rohrleitungsabschnitt eingesetzt. Hierbei wird ein Messrohr in dem das Fluid fließt in Schwingung versetzt. Durch das strömende Fluid wird die Schwingungsbewegung des Messrohrs beeinflußt. Die Schwingungsbewegung wird normalerweise mit Hilfe von zwei Schwingungssensoren erfaßt. Die Sensorsignale werden in einer Mess- und Betriebsschaltung ausgewertet. Sie weisen die gleiche Frequenz wie die Rohrschwingung des Messrohrs auf, sie sind jedoch gegeneinander phasenverschoben. Die Phasenverschiebung ist ein Maß für den Massedurchfluss des Fluids im Messrohr. In der Mess- und Betriebsschaltung werden die Sensorsignale ausgewertet und ihre Phasenverschiebung bestimmt.

Messrohr und Fluid bilden zusammen ein schwingungsfähiges System. Das normalerweise auf seiner Resonanzfrequenz angeregt wird.
Die Resonanzfrequenz hängt einerseits vom Material des Messrohrs und andererseits von der Dichte des Fluids ab.
Es gibt auch Anwendungen, wo die Anregung nicht auf der Resonanzfrequenz erfolgt, sondern auf einer zur Resonanzfrequenz benachbarten Frequenz.

Neben dem Massedurchfluss können auch weitere Eigenschaften des strömenden Fluids wie z.B. seine Dichte bzw. die Viskosität bestimmt werden.

In der US-A 4801897 ist eine Erreger-Teilschaltung beschrieben, die nach Art einer analogen Phase-Lock-Loop-Regelung aufgebaut ist. Die Erregerfrequenz stellt sich dabei auch bei veränderlicher Fluiddichte automatisch auf die Resonanzfrequenz des schwingungsfähigen Systems ein.

Bekannte Mess-Schaltungen arbeiten entweder analog wie z.B. in der EP-A698 783 bzw. der US- A 4895030 oder digital wie z.B. in der EP- A 702 212 bzw. der US A54 29 002 beschrieben.

Aus der EP- A 698 783 ist eine Messschaltung beschrieben, die einen analogen Regelkreis aufweist, der die beiden Sensorsignale auf gleiche Amplitude regelt.

Aus der EP A 866 319 ist eine weitere Mess- und Betriebsschaltung bekannt. Bei dieser Schaltung werden die beiden Sensorsignale vor der Weiterverarbeitung verstärkt, wobei ein Verstärkungsfaktor eines Verstärkers variabel ist.
In einem Digitalprozessor werden die Summe und die Differenz der beiden Sensorsignale sowie eines der Sensorsignale ausgewertet.
Für die Genauigkeit der Messung ist es wesentlich, dass die beiden Sensorsignale nach ihrer Verstärkung gleiche Amplitude besitzen. Die hierfür benötigte Amplitudenregelung wertet die Summe??? (ein Sensorsignal) und die Differenz der beiden Sensorsignale aus.
Coriolis-Massedurchflussmesser sind meist über eine Busverbindung mit einem Leitsystem oder mit einer SPS verbunden.
Die Datenverbindung erfolgt nach den internationalen Standards, wie z.B. Profibus, FF, CAN etc.
Die Messwerte werden an das Leitsystem übertragen und dort verarbeitet. Vom Leitsystem aus erfolgt die gesamte Prozeßsteuerung.

Für die Prozeßsteuerung ist es von großer Wichtigkeit, daß die Messwerte, die von Feldgeräten insbesondere von Coriolis-Massedurchflussmesser geliefert werden zuverlässig sind und dass das es zu keiner Störung im Betrieb des Coriolis-Massedurchflussmessers kommt.

Bei einem komplex aufgebauten Messgerät wie einem Coriolismassedurchflussmesser können verschiedene Fehlfunktionen auftreten, die teilweise unmittelbar das Messergebnis beeinflussen oder aber sich erst zu einem späteren Zeitpunkt auf das Messergebnis auswirken.

Der Erfindung liegt die Aufgabe zugrunde, einen Coriolis-Massedurchflussmesser vorzuschlagen, der eine sichere Prozeßsteuerung ermöglicht.

Gelöst wird diese Aufgabe durch ein Verfahren nach Anspruch 1.

Die wesentliche Idee der Erfindung besteht darin, die Eingangs- bzw. die Ausgangssignale des Signalprozessors zu überwachen und im Fehlerfall eine entsprechende Fehlermeldung abzuspeichern. Da der Fehlerfall einerseits durch Gerätefehler und andererseits durch schlechte Betriebsbedingungen verursacht sein kann, werden die Fehlermeldungen in zwei Klassen klassifiziert, gerätebedingt und betriebsbedingt.
Bei einem gerätebedingten Fehlerfall ist es für den Anwender von großer Wichtigkeit, die Fehlerursache näher zu lokalisieren. Deshalb werden die einzelnen Komponenten des Massedurchflussmessers einem Funktionstest unterzogen und/oder die momentanen Messgrößen mit zu einem früheren Zeitpunkt gewonnenen Referenzmessgrößen, verglichen.

Vorteilhafte Weiterentwicklungen der Erfindung sind in den Unteransprüchen angegeben.

Die Erfindung wird anhand der nachfolgenden Zeichnungen näher erläutert. Es zeigt:
- Fig. 1:: Messaufnehmer eines Coriolis-Massedurchflussmessers in schematischer Darstellung,
- Fig. 2:: Blockschaltbild einer Mess- und Betriebsschaltung für einen Coriolis-Massedurchflussmessers

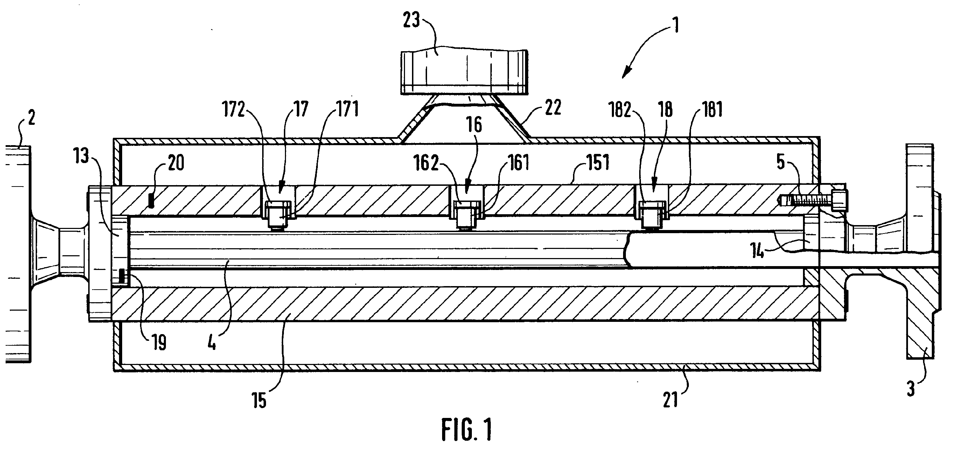

In Fig. 1 ist ein Messaufnehmer 1 für einen Coriolis-Massedurchflussmesser in schematischer Darstellung gezeigt. Der Messaufnehmer 1 ist in einer nicht dargestellten Rohrleitung angeordnet in der ein Fluid F strömt, dessen Massedurchfluss eine der interessierenden Grössen ist. Die Verbindung mit der Rohrleitung erfolgt über die beiden Flansche 2, 3.

Der Messaufnehmer 1 weist ein einziges gerades Messrohr 4 auf, das einlaßseitig über eine Endplatte 13 am Flansch 2 und auslaßseitig über eine Endplatte 14 am Flansch 3 fixiert ist.

Das erfindungsgemäße Verfahren ist nicht auf diesen speziellen Messaufnehmer 1 mit einem einzigen geraden Messrohr beschränkt. Es kann auch in Verbindung mit weiteren bekannten Messaufnehmern eingesetzt werden. Zu erwähnen sind z.B. Messaufnehmer mit einem Messrohr mit Auslegermasse, wie z.B. in der EP 97 81 0559 beschrieben, Messaufnehmer mit einem gebogenen Messrohr (EP 96 10 9242) sowie Messaufnehmer mit zwei parallelen geraden oder gebogenen Messrohren (US 4793191 bzw. US 41 27 028).

Die Flansche 2, 3 und die Endplatten sind an oder in einem Trägerrohr 15 befestigt.

Zur Erzeugung der Messrohrschwingung ist in der Mitte zwischen den beiden Endplatten 13, 14 am Messrohr 4 ein Schwingungserreger 16 angeordnet. Bei dem Schwingungserreger 16 kann es sich z.B. um einen elektromagnetischen Antrieb bestehend aus einem Permanentmagnet 161 und einer Spule 162 handeln.
Die Spule 162 ist am Tragrohr 15 und der Permanentmagnet 161 am Messrohr 4 fixiert.

Über den in der Spule 162 fließenden Strom läßt sich die Amplitude und die Frequenz der Biegeschwingung des Messrohrs 4, die in der Zeichenebene verläuft, steuern.
In der Zeichenebene treten auch die Corioliskräfte auf, die bewirken, dass nicht mehr alle Punkte entlang des Messrohrs 4 in Phase schwingen.
Die Schwingungsbewegung des Messrohrs 4 wird mit Hilfe zweier Schwingungssensoren 17 bzw. 18, die etwa symmetrisch zum Schwingungserrereger 16, ebenfalls am Tragrohr 15 angeordnet sind, aufgenommen. Bei den Schwingungssensoren 17 bzw. 18 kann es sich z.B. um elektromagnetische Wandler handeln, die ähnlich der Anordnung Permanentmagnet-Spule des Schwingungserregers 16 aufgebaut sind.
Die beiden Permanentmagnet 171, 181 sind am Messrohr 4 und die beiden Spulen 172, 182 am Tragrohr 15 fixiert. Die Bewegung des Messrohrs 4 bewirkt über die Magnete 171, 181 eine Induktionsspannung in der jeweiligen Spule 172, 182, die als analoges Sensorsignal X17 bzw. X18 abgegriffen wird. Weiterhin sind mehrere Temperatursensoren 19, 20 vorgesehen.

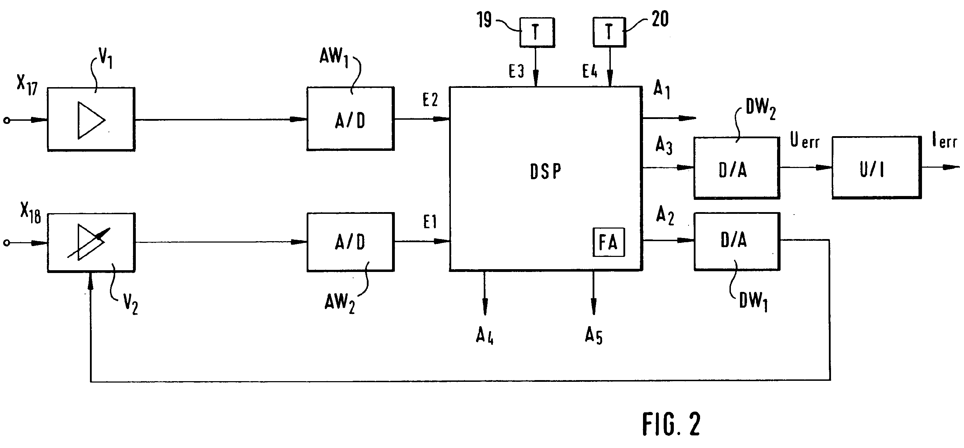

Fig. 2 zeigt die Mess- und Betriebsschaltung als Blockschaltbild.

Die Schwingungssensoren 17, 18 sind jeweils mit zwei Verstärkern V1, V2 verbunden, denen jeweils ein analog-digital Wandler A/D1, A/D2 nachgeschaltet ist. Die beiden Wandler A/D1 bzw. A/D2 sind jeweils mit je einem Eingang eines digitalen Signalprozessors DSP verbunden.

Der Ausgang A1 liefert das Massedurchflusssignal m. Die Berechnung dieses Signals m erfolgt nach einem der bekannten Verfahren, Messung der Phasenverschiebung der beiden Sensorsignale, Messung der Zeitverschiebung der beiden Sensorsignale.
Der Ausgang A2 liefert ein Steuersignal, das in einem D/A-Wandler DW1 umgesetzt wird und die Verstärkung des Verstärkers V2 regelt.

Ein Ausgang A3 liefert ein Steuersignal für den Schwingungserreger 16. Der Ausgang A3 ist über einen D/A-Wandler D/A3 mit einem U/I-Wandler U/I3 verbunden. Der U/I-Wandler U/I3 liefert das Erregersignal für den Schwingungserreger 16.

Die Ausgänge A4, A5 liefern ein Dichtesignal bzw. ein Viskositätssignal.

Der digitale Signalprozessor DPS ist über eine nicht dargestellte digitale Schnittstelle und eine Datenbusleitung mit einem Leitsystem verbunden.
Die digitale Schnittstelle kann für Hart, RS485, RS232, FF, PA, DP, Interbus S, TCP/IP, Internet ausgelegt sein.

Der digitale Signalprozessor weist einen Fehler und Alarmspeicher FA auf, in dem jeder detektierte Zustand, der zu einer reduzierten Genauigkeit des Messergebnisses m bzw. zu einem drohenden Ausfall des Geräts führen kann, chronologisch mit Datum und Uhrzeit abgespeichert wird.
Meldungen die ständig auftreten, werden als permanent gekennzeichnet.
Bei derartigen Meldungen werden nur das erstmalige Auftreten und die letzte der Fehlermeldung abgespeichert.

Nachfolgend ist das erfindungsgemäße Verfahren näher erläutert.

Wie bereits erwähnt besteht die wesentliche Idee der Erfindung darin, die Eingangs- bzw. die Ausgangssignale des Signalprozessors zu überwachen und im Fehlerfall eine entsprechende Fehlermeldung abzuspeichern. Da der Fehlerfall einerseits durch Gerätefehler und andererseits durch schlechte Betriebsbedingungen verursacht sein kann, werden die Fehlermeldungen in zwei Klassen klassifiziert, gerätebedingt und betriebsbedingt.
Bei einem gerätebedingten Fehlerfall ist es für den Anwender von großer Wichtigkeit, die Fehlerursache näher zu lokalisieren. Deshalb werden die einzelnen Komponenten des Massedurchflussmessers einem Funktionstest unterzogen und/oder die momentanen Messgrößen mit zu einem früheren Zeitpunkt gewonnenen Referenzmessgrößen, verglichen.
Als Eingangssignale dienen die Schwingungsfrequenz, das Steuersignal für den Schwingungserreger 16 bzw. die Signale der Schwingungssensoren 17, 18.

Die Schwingungsfrequenz des Schwingungssystems Messrohr mit Fluid liegt bei einem fehlerfreien Coriolis-Massedurchflussmesser innerhalb charakteristischen Grenzen. Diese Grenzen hängen vom Gerätetyp und dem Dichtebereich der Anwendung ab. Sie werden bei der Auslieferung des Geräts in einem Permanentspeicher im Gerät selbst gespeichert.
Liegt die aktuelle Schwingfrequenz außerhalb dieser Grenzwerte, so deutet dies darauf hin, daß entweder die Dichte weit oberhalb normaler Werte liegt (z.B. >5000 kg/m³) oder die(das) Messrohr(e) an Abrasion oder an Belagbildung leiden.

Es erfolgt eine entsprechende Meldung an das Leitsystem.

Für ein einphasiges Fluid muß die Schwingfrequenz und die Amplitude der Schwingung zeitlich stabil sein. Die Frequenzregelung sowie die Amplitudenregelung erfolgen in der digitalen Speichereinheit.
Die Regelabweichungen in der Frequenz sowie in der Amplitude geben Aufschluß über weitere Eigenschaften des Fluids (Gasbeladung, Feststoffanteil, Kompressibilität etc.). Diese Messwerte müssen ebenfalls innerhalb betimmter Messwertegrenzen liegen. Liegen die Messwerte außerhalb dieser Messwertegrenzen, so deutet dies auf eine Fehlfunktion hin. Es erfolgt eine entsprechende Meldung an das Leitsystem.

Die Schwingungsamplitude der Messrohrschwingung wird über die Erregerleistung gesteuert. Mit zunehmender Messstoffviskosität nimmt die erforderliche Erregerleistung zu.
Die Erregerleistung ist systembedingt beschrängt. Wird die maximale Erregerleistung erreicht, so kann bei weiterer Viskositätszunahme die Schwingungsamplitude nicht mehr auf dem Sollwert gehalten werden. Solange die Schwingungsamplitude dabei noch über einem bestimmten Grenzwert liegt, ist ein eingeschränkter Messbetrieb möglich.
Beim Erreichen der maximalen Erregerleistung wird eine entsprechende Nachricht an das Leitsystem gesendet.
Sinkt die Schwingungsamplitude bei maximaler Erregerleistung unter den Grenzwert ab ist kein zuverlässiger Messbetrieb mehr möglich. Auch hier wird eine entsprechende Nachricht an das Leitsystem gesendet.

In der Regel sind zwei Schwingungssensoren 17, 18 am Messrohr 4 angeordnet, die die Schwingungsbewegung des Messrohrs 4 aufnehmen. Da die Sensoren 17, 18 identisch aufgebaut sind, sollten die Messwerte der Schwingungsamplituden nicht stark voneinander abweichen. Die Messwerte liegen bei fehlerfreien Sensoren innerhalb einer vorgegebenen Bandbreite. Weichen die Messwerte stärker ab, ist dies ein Hinweis darauf, daß die Sensoren nicht mehr einwandfrei funktionieren. In diesem Fall erfolgt eine entsprechende Meldung an das Leitsystem.

Zu den Sensorsignalen wird je ein Testsignal hinzuaddiert und über den Vorverstärkerteil, über die AD-Wandler bis in den DSP geführt. Diese Testsignale dienen zur Überwachung der gesamten Messschaltung. Liegen die verarbeiteten Testsignale außerhalb vorgegebenen Grenzwerte, z.B. durch Verstärkungsfaktoren von Anlaogverstärkern bestimmt, so ist dies ein Hinweis darauf, daß die Messschaltung nicht mehr fehlerfrei arbeitet.

Weiterhin wird der Störpegel auf den analogen Eingangssignalen gemessen. Übersteigt der Störpegel einen gewissen vorgegebenen Grenzwert, wird der verstärkungsfaktor der Analogverstärker verringert. Die Genauigkeit der Messung ist verringert.
Es wird eine entsprechende Meldung an das Leitsystem gesendet.

Ist eine Fehlfunktion aufgetreten, so muss dieser genauer analysiert werden. Fehlfunktionen können unterschiedliche Ursachen haben, zum einen können sie durch schlechte Betriebsbedingungen verursacht sein oder aber durch Defekte an Bauteilen des Coriolismassedurchflussmessers.
In beiden Fällen ist eine Information des Anwenders z.B. über das Leitsystem notwendig, jedoch müssen beide Fälle klar zu unterscheiden sein.
Im ersten Fall müssen die Betriebsbedingungen geändert werden, im zweiten Fall sind eventuell Geräteteile auszutauschen.

Aus diesem Grunde werden die charakteristischen Werte (Impedanz, Innenwiderstand etc.) der Sensoren ermittelt oder gemessen und mit den Sollwerten verglichen.

Weiterhin werden statt der Sensorsignale Testsignale den Eingängen des Signalprozessors DSP zugeführt. So kann unterschieden werden, ob die Sensoren fehlerhaft sind oder der Signalprozessor fehlerhaft arbeitet.

Hierbei wird die Fehlerursache ohne Referenzbedingungen näher lokalisiert.

Bei jeder Inbetriebnahme einer Anwendung wird ein Profil erstellt, das eine Vielzahl von Größen umfaßt.

Schwingfrequenz, Erregerleistung, Schwingungsamplitude, Massedurchfluss ist, Massedurchfluss soll, Nullpunkt statisch, Dichte ist, Dichte soll, Messrohrtemperaturen ist, Messrohrtemperaturen soll, Viskosität ist, Viskosität soll, Regelabweichung Frequenzregelung, Regelabweichung Amplitudenregelung, Sensoramplitudensymmetrie, Testsignalamplitude, Störpegel Analogsignale.

Zur weiteren Fehlereingrenzung müssen die ursprünglichen Bedingungen (bei der Inbetriebnahme) wieder hergestellt werden. Das neue Profil wird mit dem alten Profil verglichen und auf Veränderungen untersucht. Abweichungen können auf vorhandene oder bevorstehende Gerätedefekte (Abrasion, Korrosion, Kaviation etc.) hindeuten.

## Patentansprüche

1. Verfahren zur Überwachung eines Coriolismassedurchflussmessers mit mindestens zwei Schwingungssensoren (17, 18), einem Schwingungserreger (16) und mehreren Temperatursensoren (19, 20) die mit vier Eingängen E1, E2, E3, E4 eines digitalen Signalprozessor DSP verbunden sind, der an seinen Ausgängen A1, A2, A3, ein Massedurchflusssignal, ein Steuersignal für den Schwingungserreger (16) und ein Steuersignal für einen Verstärker V2, der dem Schwingungssensor (18) nachgeschaltet ist, liefert, mit folgenden Verfahrensschritten,
a) Fehlerüberwachung der Eingangs bzw. Ausgangssignale des Signalprozessors DSP
b) Speichern einer Fehlermeldung bei Auftreten eines Fehlers mit Zeitangabe
c) Klassifizierung der Fehlermeldung in zwei. Fehlerklassen gerätebedingt bzw. bedriebsbedingt
d) Lokalisierung des Fehler im Fehlerfall gerätebedingt, durch einen Funktionstest einzelner Komponenten des Massedurchflussmessers und/oder Vergleich der momentanen Messgrößen mit Referenzmessgrößen, die bei gleichen Betriebsbedingungen gewonnen wurden.

2. Verfahren nach Anspruch 1, **dadurch gekennzeichnet, daß** das Eingangssignal Schwingfrequenz in einem Frequenzintervall liegt.

3. Verfahren nach Anspruch 1, **dadurch gekennzeichnet, daß** bei homogenen einphasigen Messmedien, das Eingangssignal Schwingfrequenz stabil ist.

4. Verfahren nach Anspruch 1, **dadurch gekennzeichnet, daß** das Steuersignal für den Schwingungserreger (Ausgangssignal A3) einen Grenzwert nicht übersteigt bzw. die erzeugte Messrohrauslenkung nicht einen zweistufigen Grenzwert unterschreitet.

5. Verfahren nach Anspruch 1, **dadurch gekennzeichnet, dass** der Unterschied der Amplituden der Eingangssignale E1, E2 der beiden Schwingungssensoren (17, 18) einen Grenzwert nicht übersteigt.

6. Verfahren nach Anspruch 1, **dadurch gekennzeichnet, dass** den Eingangssignalen der beiden Schingungssensoren (17, 18) jeweils ein Testsignal überlagert wird, dessen Amplitude innerhalb eines Intervalls liegt.

7. Verfahren nach Anspruch 1, **dadurch gekennzeichnet, dass** der Störpegel der Eingangssignalssignale E1, E2 einen Grenzwert nicht übersteigt.

8. Verfahren nach Anspruch 1, **dadurch gekennzeichnet, dass** als Funktionstest die charakteristischen Werte (Impedanz, Isolationswiderstand) der Sensoren (17, 18, 19, 20) und des Erregers (16) gemessen und mit Sollwerten verglichen werden.

9. Verfahren nach Anspruch 1, **dadurch gekennzeichnet, dass** als Funktionstest dem Signalprozessor DSP simulierte Sensorsignale, die gewissen Sollmesswerten entsprechen, zugeführt werden und die Messergebnisse mit den Sollmesswerten verglichen werden.

10. Verfahren nach Anspruch 1, **dadurch gekennzeichnet, dass** als Referenzmessgröße die Schwingfrequenz dient.

11. Verfahren nach Anspruch 1, **dadurch gekennzeichnet, dass** als Referenzmessgröße das Steuersignal für den Schwingungserreger (16) dient.

12. Verfahren nach Anspruch 1, **dadurch gekennzeichnet, dass** als Referenzmessgröße das Massedurchflusssignal dient.
